# EUROPÄISCHE PATENTSCHRIFT

(11) **EP 1 047 857 B1**
(45) Veröffentlichungstag und Bekanntmachung des Hinweises auf die Patenterteilung: **20.03.2002**
(21) Anmeldenummer: 98963379.7
(22) Anmeldetag: 25.11.1998
(51) Int. Cl.: E21B 10/44

(54) **GESTEINSBOHRWERKZEUG**
ROCK DRILLING TOOL
PERFORATEUR DE ROCHES

(30) Priorität: 04.12.1997 DE 19753731
(43) Veröffentlichungstag der Anmeldung: 02.11.2000
(60) Teilanmeldung: 00117687.4
(73) Patentinhaber: Hawera Probst GmbH, 88212 Ravensburg (DE)
(72) Erfinder: FUSS, Mathias, D-88250 Weingarten (DE); WAGEGG, Thomas, D-88353 Kisslegg (DE); MOSER, Bernhard, D-88361 Altshausen (DE)
(74) Vertreter: Otten, Herbert
(86) Internationale Anmeldenummer: DE9803465
(87) Internationale Veröffentlichungsnummer: WO9929998

(56) Entgegenhaltungen:
- DE-A- 3 740 692
- DE-A- 19 507 487
- DE-B- 2 358 447
- DE-C- 803 291

## Beschreibung

Die Erfindung betrifft ein Bohrwerkzeug insbesondere ein Gesteinsbohrwerkzeug nach dem Oberbegriff des Anspruchs 1.

### Stand der Technik:

Gesteinsbohrer bestehen aus einem, meist mit einer Hartmetall-Schneidplatte versehenen Bohrerkopf, einer sich hieran anschließenden ein- oder mehrgängigen spiralförmigen Förderwendel sowie einem nachfolgenden Einspannschaft zur Befestigung in einer Antriebsmaschine. Die Förderwendel hat bei Gesteinsbohrern die Hauptaufgabe, das durch die Hartmetallschneide gelöste Material, d. h. das Bohrmehl oder Bohrklein, aus dem Bohrloch herauszufördern. Dabei spielt die Größe der Bohrmehlnut, d. h. der freie Förderquerschnitt, für die Leistungsfähigkeit des Bohrers eine entscheidende Rolle, d. h. ein guter Bohrmehltransport gewährleistet einen guten Vorschub und verhindert Rattarmarken im Bohrloch sowie eine Beschädigung des Bohrers durch Verklemmen, Überhitzen, oder dergleichen. Auch die Standzeiten eines Bohrwerkzeugs werden durch die guten Fördereigenschaften der Bohrmehlnut beeinflußt.

Die Förderwendel hat darüber hinaus auch Führungseigenschaften des Bohrwerkzeugs im Bohrloch zu erfüllen.

Die wendelförmige Abfuhrnut für Bohrmehl einer ein- oder mehrgängigen Förderwandel wird beidseitig von ebenfalls wendelförmig verlaufenden Stegen begrenzt. Dabei wird eine in Transportrichtung des Bohrmehls, d. h. in Richtung Einspannschaft, weisende Tragfläche oder Transportfläche für das Bohrmehl durch die Stege gebildet. Die Umfangsfläche oder Mantelfläche eines Stegs bildet die sogenannte Rückenfläche mit einer bestimmten Rückenbreite des Stegs. Je breiter diese Rückenfläche ausgeführt ist, um so besser sind die Führungseigenschaften des Bohrwerkzeugs im Bohrloch. Nachteilig hieran ist jedoch die vergrößerte Reibung im Bohrloch und das verkleinerte Nutenvolumen zum Abtransport des Bohrmehls. Es müssen demnach Kompromisse zwischen Breite der Rückenfläche der Stege und des daraus resultierenden Nutenvolumens einerseits und den geforderten Führungseigenschaften andererseits getroffen werden.

Aus der DE-AS 20 13 328 ist der prinzipielle Aufbau einer solchen zweigängigen Förderwendel in den dortigen Figuren dargestellt.

Es gibt eine Reihe von Vorschlägen, die Fördereigenschaften des Bohrmehls in den Bohrmehlnuten zu verbessern. Beispielsweise ist gemaß der EP 0 126 409 B2 vorgesehen, die Steigungshöhe der Förderwendel in Richtung Einspannende zu vergrößern, um so im Bereich des Bohnerkopfes eine erhöhte Anzahl von Stegflächen zur Verbesserung der Führungseigenschaften zur Verfügung zu stellen. Hierdurch vergrößert sich auch die Bohrmehlnut in Richtung Einspannende, d. h. in Förderrichtung des Bochrmehls, so daß es nicht zu einem Verklemmen des Bohrers kommen kann.

In der DE 30 14 693 C2 ist ausgeführt, daß gute Fördereigenschaften einer Förderwendel nach dem Prinzip einer Förderschnecke nur dann vorliegen, wenn zwischen dem in der Abfuhrnut befindlichen Bohrklein und der Wandung des Bohrlochs ein größerer Reibungswiderstand als zwischen dem Bohrklein und der Oberfläche der Abfuhrnut besteht. Hierfür sei es erforderlich, daß das Nutenvolumen der Bohrmehlnut stets an die anfallende Menge an Bohrmehl angepaßt ist, um diese Reibungsverhältnisse zu schaffen. Dies ist jedoch aufgrund der unterschiedlich anfallenden Menge an Bohrmehl aufgrund unterschiedlicher Bohrbedingungen nicht möglich. Dieser Stand der Technik schlägt deshalb vor, die Bohrmehlnut abschnittsweise in Richtung Einspannende zu vergrößern.

Aus der DE 43 38 667 A1 ist ein Gasteinsbohrer bekannt geworden, bei welchem eine Verminderung der Wandreibung dadurch erzeugt wird, daß die Rückenflächen der spiralförmigen Stege darin eingebrachte Nuten aufweisen. Diese Nebennuten bewirken in erster Linie eine Reduzierung der Fläche der Eückenstege und vermindern damit die Reibung. In gewissem Umfang können sie auch zur Abfuhr von Bohrgut dienen, was jedoch lediglich ein Nebeneffekt darstellt.

Aus der De-A-3 740 692 ist ein Gesteinsbohrer bekannt geworden, welcher eine ein- oder mehrgängige Förderwendel mit einer nicht unterbrochenen, wendelförmigen Hauptfördernut aufweist. Innerhalb der Hauptfördernut sind zur Bildung von wendelförmigen Nebenfördernuten Förderrippen eingelagert, die eine kleinere Steigung als die Hauptfördernut aufweisen. Die die Hauptfördernut begrenzenden Hauptstege unterbrechen die wendelförmigen Neberfördernuten, so dass ein ungehinderter Bohrmehltransport in den Nebenfördernuten nicht erfolgen kann. Darüber hinaus erscheint die sehr unterschiedliche Steigung von Haugtfördernut und Nebenfördernut die Transporteigenschaften des Bohrmehls negativ zu beeinflussen.

Aus der DE-PS-803 291 ist weiterhin ein Kohle- und Gesteins-Drehbohrer bekannt geworden, der aus einem verdrillten länglichen Profilstab hergestellt ist. Verwendet man als Ausgangsmaterial eine Bohrstange mit rombischem Querschnitt, so werden durch einander gegenüberliegenden Ecken bei einer Verdrillung sogenannte "Sekundärschneckenrippen" gebildet, die zwischen den Hauptrippen liegen. Derartige Sekundärschneckenrippen können den Bohrmehltransport unterstützen. Nachteilig hieran ist die Tatsache, daß die Bildung von Sekundärschneckenrippen mittels derartigen rombischen Grundprofilen zu einer Nutenausbildung führt, die im wesentlichen nicht zu einem achsparallelen Nutgrund führt, wie dies bei einem verdrillten Flügelprofil mit zylindrischem Kernquerschnitt der Fall ist. Ein nicht achsparalleler Nutengrund hat jedoch eine verminderte Förderkapazität des Bohrmehls zur Folge. Eine zusätzliche spanabhebende Nachbearbeitung einer verdrillten Förderwendel ist nicht angegeben.

Der Erfindung liegt die Aufgabe zugrunde, ein Bohrwerkzeug zu schaffen, welches gegenüber herkömmlichen Bohrwerkzeugen verbesserte Fördereigenschaften für das Bohrgut aufweist, bei einer Verminderung der Wandreibung. Dabei sollen möglichst einfache und damit kostengünstige konstruktive Maßnahmen den gewünschten Erfolg herbeiführen.

Diese Aufgabe wird ausgehend von einem Bohrwerkzeug nach dem Oberbegriff des Anspruchs 1 durch die kennzeichnenden Merkmale des Anspruchs 1 gelöst.

In den Unteransprüchen sind vorteilhafte und zweckmäßige Weiterbildungen des Gesteinsbohrwerkzeugs nach Anspruch 1 angegeben.

Der Erfindung liegt die Erkenntnis zugrunde, daß gute Fördereigenschaften des Bohrmehls in Bohrmehlnuten nicht zuletzt auch durch die Größe der zur Verfügung stehenden Bohrmehl-Tragflächen bestimmt wird. Diese Gröβe wird durch die Anzahl der vorhandenen Abfuhrnuten mit jeweils einem zugehörigen Steg mit Tragfläche bestimmt. Eine ausreichende Anzahl oder Menge von Bohrmehl-Tragflächen werden durch die im wesentlichan senkrecht zur Bohrlängsachse angeordnetes Flanken von wendelförmig verlaufenden Stegen gebildet. Die erfindungsgemaße Ausbildung des Bohrwerkzeugs sieht vor, daß außer den üblicherweise vorgesehenen Hauptstegen mit entsprechenden Tragflächen, Förderkanten oder Förderflanken zusätzlich sogenannte Nebenförderelemente wie Nebenstege oder Nebenflanken vorgesehen sind, die ihrerseits zusätzliche Bohrmehltragflächen bilden. Dabei können die Nebenstege ähnlich wie die Hauptstege ausgebildet sein. Ihr Außendurchmesser ist jedoch grundsätzlich kleiner als der Außendurchmesser der Förderwendel, so daß die Reibungsverluste bei verbesserten Fördereigenschaften reduziert werden. Es können auch Kernausbuchtungen zur Bildung von zusätzlichen Tragflächen oder Förderkanten für Bohrmehl vorgesehen sein.

Durch erfindungsgemäße Maßnahmen wird die Abfuhrnut als sogenannte Doppelnut oder Mehrfachnut gebildet, so daß innerhalb einer Abfuhrnut mehrere Einzelnuten mit zugehörigen Tragflächen für Bohrmehl vorhanden sind.

Ausgehend von dieser Grunderkanntnis ergeben sich eine Vielzahl von Gestaltungsmöglichkeiten zur Verwirklichung dieser Grundidee. Diese Gestaltungsmöglichkeiten beinhalten eine Variation der Art der Anordnung der Nebenstege und/oder der Nebentragflächen in Form von Nebenförderkanten. Variiert werden kann auch die Ansahl solcher Nebenförderelemente, wodurch nicht zuletzt auch die Aufteilung der Abfuhrnut in gleich große oder unterschiedlich große Teil-Abfuhrnuten folgt, mit gleich großen oder unterschiedlich großen Nutentiefen.

Verschiedene Ausführungsbeispiele des erfindungsgemäßen Grundgedankens sind in der Zeichnung dargestellt und in der nachfolgenden Beschreibung näher erläutert.

Es zeigen
- Fig. 1: ein erfindungsgemäßes Bohrwerkzeug in Gesamtdarstellung,
- Fig. 2-11: verschiedene Ausführungsvarianten des Bohrwerkzeugs nach Fig. 1,
- Fig. 12, 13: stelles keine Ausführungsform der Erfindung dar.

### Beschreibung der Ausführungsbeispiele:

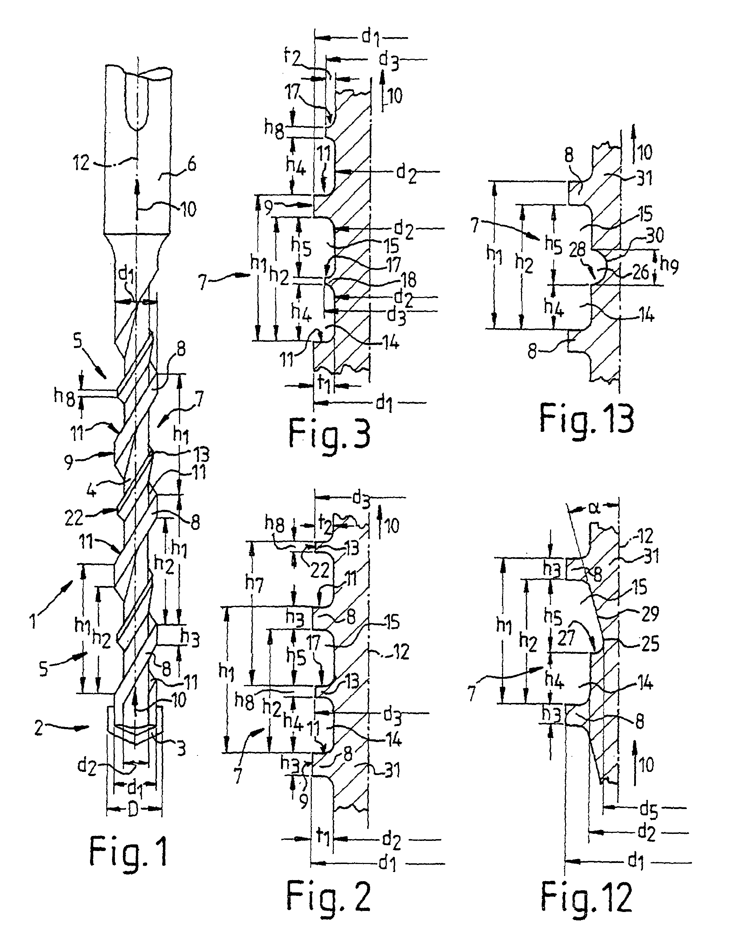

Das in Fig. 1 dargestellte Ausführungsbeispiel stellt ein erstes Grundprinzip der Erfindung dar. Hier wird das Prinzip der Bildung von Haupt- und Nebenstegen dadurch bewirkt, daß innerhalb einer bestehenden Abfuhrnut 7 einzelne Abfuhrnut-Abschnitte gebildet werden, die für sich gesehen zusätzliche Bohrmehltragflächen bilden. Eine Variante dieses Grundprinzips ist in den Fig. 2 bis 13 jeweils dargestellt.

Das in Fig. 1 dargestellte Gesteinsbohrwerkzeug 1 besteht aus einem Bohrerkopf 2, vorzugsweise mit stirnseitig vorgesehener Hartmetall-Schneidplatte 3, einem Wendelschaft 4 mit spiralförmiger Förderwendel 5 und einem sich anschließenden Einspannschaft 6 zum Einsetzen in eine Antriebsmaschine.

Beim Ausführungsbeispiel nach Fig. 1 ist die spiralförmige förderwendel eingängig mit der Steigungshöhe (h₁) ausgebildet, wodurch sich eine umlaufende wendelförmige Abfuhrnut 7 mit der Nutenhöhe h₂ ergibt, die beidseitig von einem ebenfalls wendelförmig verlaufenden Steg 8 begrenzt ist. Die Steghöhe h₃ bildet den äußeren Umfang oder die Rückenfläche 9 des Stegs 8. Die Rückenfläche 9 weist den Förderwendeldurchmesser d₁ auf. Der Nenndurchmesser des Bohrwerkzeugs wird gebildet durch den Durchmesser D der Hartmetall-Schneidplatte 3. Der Kerndurchmesser des Bohrerkerns 31 der Förderwendel ist mit d₂ bezeichnet.

Das durch die Bohrmehlnut oder Abfuhrnut 7 geförderte Bohrmehl oder Bohrklein stützt sich auf der in Förderrichtung 10 weisenden Tragfläche 11 ab, die einen etwa rechtwinkligen Verlauf zur Bohrerlängsachse 12 aufweist.

Gemäß der Darstellung nach Fig. 1 sowie der vergrößerten Darstellung in Fig. 2 befindet sich innerhalb der Abfuhrnut 7 ein sogenannter Nebensteg 13. Dieser Nebensteg 13 stellt grundsätzlich eine verkleinerte Ausführungsform des hauptstegs 8 dar. Er kann jedoch auch geometrisch variieren. Die Abfuhrnut 7 mit der Höhe h₂ wird durch einen Nebensteg 13 in einen unteren Nutenabschnitt 14 mit der Höhe h₄ und einem oberen Nutenabschnitt 15 mit der Höhe h₅ aufgeteilt. Die Steghöhe des Nebenstegs 13 ist mit h₉ bezeichnet. Die äußere Rückenfläche das Nebenstegs 13 ist mit Bezugszeichen 22 bezeichnet. Der Außendurchmesser der äußeren Rückenfläche 22 ist mit d₃ angegeben.

Durch den zusätzlichen Nebensteg 13 zum Hauptsteg 8 entsteht eine zusätzliche Tragfläche 17, die ebenfalls etwa rechtwinklig zur Bohrerlängsachse 10 verläuft.

Der Außendurchmesser d₃ der Nebenstege ist im Ausführungsbeispiel nach Fig. 1 und 2 nur geringfügig kleiner bemessen als der Außendurchmesser d₁ der Förderwendel 7. Hierdurch bildet die Abfuhrnut 7 eine Art Doppelnut mit den Nutabschnitten 14, 15 und der Haupttragfläche 11 sowie der Nebentragfläche 17 für das Bohrmehl. Der Nebensteg 13 verläuft demnach ebenfalls als Spiralförmige Nebenförderwendel mit der Steigungshöhe h₇ innerhalb der Abfuhrnut 7.

Gemäß dem Ausführungsbeispiel nach Fig. 1 und 2 sind der untere Nutenabschnitt 14 und der obere Nutenabschnitt 15 mit ihrer Höhe h₄ und h₅ etwa in gleicher Große ausgebildet. Gleiches gilt für das Ausführungsbeispiel nach Fig. 3. Hier sind gleiche Teile mit gleichen Bezugszeichen versehen. In Fig. 3 ist jedoch der Außendurchmesser d₃ des dortigen Nebenstegs 18 deutlich kleiner bemessen, so daß sich nur eine kleinere Tragfläche 17 für das zu transportierende Bohrmehl ergibt. Die Nutenaufteilung der Nutenabschnitte 14, 15 ist in Fig. 3, ebenso wie in Fig. 2, symmetrisch vorgenommen, d. h. h₄ ≈ hₛ. Das Durchmesserverhältnis d₃ zu d₁ liegt bei den Ausführungsbeispielen nach Fig. 2 und 3 im Bereich von etwa 0/7 bis 0,95, um eine ausreichende Nebentragfläche 17 zu bilden.

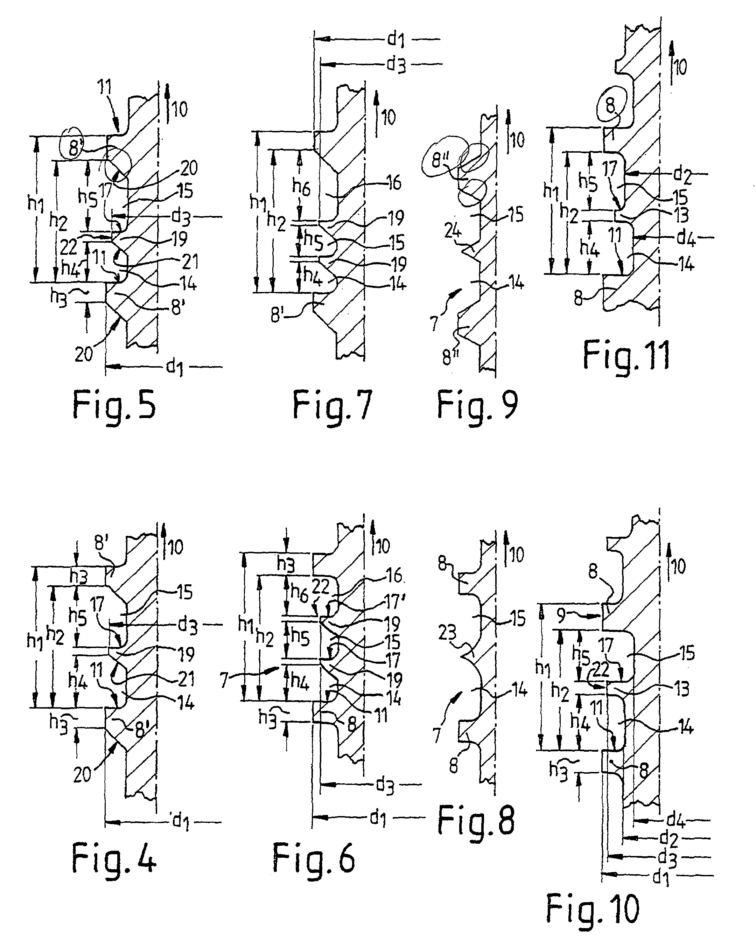

In den Fig. 5 bis 11 sind weitere Varianten der Ausführungsform nach den beschriebenen Fig. 2 und 3 angegeben. Gleiche Teile sind mit gleichen Bezugszeichen versehen.

Unterschiedlich zum Ausführungsbeispiel nach Fig. 2 sind in Fig. 4 und 5 sowohl der Hauptsteg 8' als auch der Nebensteg 19 in einer Art Sägezahnform ausgebildet, d. h. der der jeweiligen Tragfläche 11, 17 gegenüberliegende Bereich des jeweiligen Stegs ist als abgeschrägte Fläche 20 für den Hauptsteg 8' und als abgeschrägte Fläche 21 für den Nebensteg 19 ausgebildet.

In Fig. 4 sind die Abfuhrnutenabschnitte 14, 15 wiederum symmetrisch ausgebildet, d. h. h₄ ≈ h₅. In Fig. 5 liegt eine asymmetrische Anordnung für die Nutenaufteilung vor. Hier ist h₄ < h₅, d. h. der Abfuhrnutabschnitt 14 ist kleiner als der Abfuhrnutabschnitt 15. Die Durchmesser d₃ der äußeren Rückenflächen 22 der Nebenstege 19 können analog zur Darstellung nach den Fig. 2 und 3 ausgebildet sein. In der Darstellung nach Fig. 4 und 5 sind die Durchmesser d₃ gleich ausgebildet.

Eine weitere Variante der Erfindung ist in den Fig. 6 und 7 dargestellt. Hier ist die Abfuhrnut 7 in drei Teilabschnitte 14, 15, 16 aufgeteilt, mit den Höhen h₄, h₅ und h₆ der jeweiligen Abfuhrnut-Abschnitten. Der Hauptsteg 8 ist analog zur Ausführungsform nach Fig. 2 und 3 im wesentlichen rechtwinklig, die Nebenstege 19 analog zu den Ausführungsbeispielen nach Fig. 4 und 5 nach Art einer Sägezahnform ausgebildet.

Die Ausführungsvariante nach Fig. 7 unterscheidet sich von der nach Fig. 6 dadurch, daß wiederum eine asymmetrische Aufteilung der Nutenabschnitte 14, 15, 16 vorgenommen wird, wobei der untere 14 und der mittlere Nutenabschnitt 15 etwa eine gleiche Höhe h₄ ≈ h₅ aufweisen, während die Nutenhöhe h₆ des oberen Nutenabschnitts 16 etwa doppelt so groß ist wie die Höhen h₄, h₅.

Ahnlich wie in den Fig. 4 und 5 sind auch in Fig. 7 die Stege 8', 9 nach Art einer Sägezahnform ausgebildet.

In den Fig. 6 und 7 sind, die Außendurchmesser d₃ der äußeren Rückenflächen 22 in einem Abmessungsbereich zum Förderwendeldurchmesser d₁, wie dies zu Fig. 2 und 3 beschrieben ist.

Das Ausführungsbeispiel der Erfindung nach Fig. 8 entspricht weitestgehend dem Ausführungsbeispiel nach Fig. 2, jedoch mit dem Unterschied, daß die Stegform des Nebenstegs 23 bogenförmig und spitz zulaufend ausgebildet ist, bei ansonsten symmetrischer Anordnung innerhalb der Abfuhrnut 7. Der Hauptsteg 8 ist wiederum rechteckförmig ausgebildet, wie dies zu Fig. 2 und 3 beschrieben ist.

Das Ausführungsbeispiel nach Fig. 9 zeigt einen dreieckförmigen Nebensteg 24, der wiederum symmetrisch in der Abfuhrnut 7 angeordnet ist. Die Hauptstege 8'' sind im Querschnitt trapezförmig ausgebildet. Im übrigen liegt eine symmetrische Anordnung der Abfuhrnut-Abschnitte 14, 15 innerhalb der Abfuhrnut 7 vor.

Bei der Darstellung der Ausführungsbeispiele nach den Fig. 2 bis 9 sind die Kerndurchmesser aller Abfuhrnut-Abschnitte etwa gleich ausgebildet. Dieser Kerndurchmesser ist mit d₂ bezeichnet.

Demgegenüber zeigen die Ausführungsbeispiele nach Fig. 10 und 11 Nutenabschnitte 14, 15 mit unterschiedlichem Kerndurchmesser als Ausführungsvarianten.

In Fig. 10 ist der untere Nutenabschnitt 14 mit einem Kerndurchmesser d₂, der obere Nutenabschnitt 15 mit einem Kerndurchmesser d₄ ausgebildet, wobei d₄ < d₂ ist. Durch eine Verkleinerung des Kerndurchmessers im oberen Nütenabschnitt 15 kann das Nutenvolumen zur Aufnahme von Bohrmehl noch weitere vergröβert werden. Auch die Nebentragfläche 17 des Nebenstegs 13 vergrößert sich damit. Hierdurch kann der verkleinerte Außendurchmesser d₃ (d₃ < d₁) kompensiert werden.

Der umgekehrte Fall liegt im Ausführungsbeispiel nach Fig. 11 vor. Hier ist der untere Nutenabschnitt 14 mit einem kleineren Kerndurchmesser d₄ ausgestattet, während der obere Nutenabschnitt 15 den normalen Kerndurchmesser d₃ aufweist.

Die Außführungsbeispiele nach den Fig. 2 bis 11 zeigen auf, daβ sich eine Vielzahl von Variationsmöglichkeiten ergehen, um innerhalb einer Abfuhrnut 7 einer ein- oder mehrgängigen Förderwendel Nutenabschnitte herzustellen, indem ein Nebensteg 13, 18, 19 zum Hauptsteg 8, 8', 8'' gebildet wird. Die geometrische Ausbildung dieser Nebenstege kann in verschiedenen Variationen erfolgen. Auch die symmetrie oder Asymmetrie der verschiedenen Nutenabschnitte innerhalb der Abfuhrnut 7 kann die Bigenschaften der Abfuhrnut beeinflussen. Schließlich können verschiedene Kerndurchmesser der Nutenabschnitte zu verschieden großen Nutenvolumen führen.

Eine nicht zur Erfindung gehörende Ausführungsform zeigt Fig. 12 und 13. Hier wird anstelle eines oder mehrerer zusätzlichen Nebenstege zum Hauptsteg 8 sozusagen negative Stege durch Ausbuchtungen 25, 26 gebildet. Hierfür wird der Kernquerschnitt der Förderwendel durch eine entsprechende Ausbuchtung geschwächt die dann zur entsprechenden Tragflächen 27, 28 führen.

Bei der Darstellung nach Fig. 12 wird eine nasenförmige Aussparung 29 in den Förderwendelkern eingebracht, was zu einer maximalen Verringerung des Kernquerschnitts auf den Durchmesser d₅ führt. Die so ausgeführte Abschrägung weist gegenüber der Bohrerlängsachse 12 einen Winkel α ≈ 15° auf.

Durch die so gebildete zusätzliche Tragfläche 27 wird die Abfuhrnut 7 in einen unteren Nutenabschnitt 14 mit der Höhe h₄ und einen oberen Nutenabschnitt 15 mit der Höhe h₅ geteilt, wobei h₄ ≤ h₅ ist.

Die in Fig. 12 dargestellte nasenförmige Aussparung 29 mit der Tragfläche 27 wird beim Ausführungsbeispiel nach Fig. 13 durch eine halbkreisförmige Aussparung 30 ersetzt, mit einer Höhe h₉.

Die halbkreisförmige Aussparung 30 bildet wiederum eine zusätzliche Tragfläche 28 für Bohrmehl. Hierdurch wird die Abfuhrnut 7 auch beim Ausführungsbeispiel nach Fig. 13 in einen unteren Nutenabschnitt 14 und einen oberen Nutenabschnitt 15 aufgeteilt.

In allen Figuren ist mit Pfeil 10 die Transportrichtung des Bohrmehls innerhalb der Bohrmehlnuten angegeben, die in Richtung Einspannende 6 zeigt.

Die vorliegende Erfindung wird dadurch verwirklicht, daß anstelle von Abfuhrnut-Abschnitten innerhalb einer bestehenden Abfuhrnut mehrere spiralförmige Abfuhrnuten vorgesehen sind, die jedoch mit unterschiedlichen Außendurchmessern der jeweiligen, die Abfuhrnuten begrenzenden Stege versehen sind. Beispielsweise kann bei einer 2-spiraligen oder 4-spiraligen Förderwendel jeder zweite Steg in seinem Außendurchmesser kleiner ausgeführt werden, so daß hierdurch eine verminderte Wandreibung durch die verkleinerten Außendurchmesser entsteht. Diese Variation des Außendurchmessers der Stege kann in symmetrischer oder asymmetrischer Reihenfolge über die Länge der Förderwendel stattfinden. Hierdurch wird die Wandreibung stets vermindert, bei nahezu gleichbleibenden Fördereigenschaften der Förderwendel.

Die Erfindung ist nicht auf die dargestellten und beschriebenen Ausführungsbeispiele beschränkt. Sie umfaßt auch vielmehr alle weiteren fachmännischen Abwandlungen im Rahmen der Schutzrechtsansprüche.
- 1: Gesteinsbohrwerkzeug
- 2: Bobrerkopf
- 3: Hartmetall-Schneidplatte
- 4: Wendelschaft
- 5: spiralförmige Förderwendel
- 6: Einspannschaft
- 7: Abfuhrnut
- 8: Steg (Haupt-)
- 9: äußerer Umfang (Rückenfläche)
- 10: Förderrichtung
- 11: Tragfläche (Haupt-)
- 12: Bohrerlängsachse
- 13: Nebensteg
- 14: unterer Nutenabschnitt
- 15: oberer Nutenabschnitt
- 16: Nutenabschnitt
- 17: Tragfläche (Neben-)
- 18: Nebensteg
- 19: Nebensteg
- 20: abgeschrägte Fläche
- 21: abgeschrägte Fläche
- 22: äußere Rückenfläche
- 23: Nebensteg
- 24: Nebensteg
- 25: Ausbuchtung
- 26: Ausbuchtung
- 27: Tragfläche
- 28: Tragfläche
- 29: nasenförmige Aussparung
- 30: halbkreisförmige Aussparung
- 31: Bohrerkern

- h₁: Steigungshöhe der Hauptförderwendel
- h₂: Nutenhöhe
- h₃: Steghöhe von 8
- h₄: unterer Nutenabschnitt
- h₅: oberer mittlerer Mutsnabschnitt
- h₆: oberer Nutenabschnitt
- h₇: Steigungshöhe der Nebenförderwendel
- h₈: Steghöhe von 13
- h₉: Höhe der Ausbuchtung 30
- d₁: Förderwendeldurchmesser
- D: Nenndurchmesser
- d₂: Kerndurchmesser
- d₃: Außendurchmesser der Nebenförderwendel
- d₄: Kerndurchmesser
- d₅: Kerndurchmesser
- t₁: Nutentiefe (d₁-d₂)
- t₂: Nutentiefe (d₃-d₂)

## Patentansprüche

1. Bohrwerkzeug, insbesondere Gesteinsbohrer für drehende und/oder schlagende Beanspruchung, mit einem Bohrerkopf (2), einer sich hieran anschließenden, ein- oder mehrgängigen spiralförmigen Förderwendel (5) mit wenigstens einer Abfuhrnut (7) für Bohrmehl und einem Einspannschaft (6), wobei die Abfuhrnut (7) der Förderwendel (5) von spiralförmig verlaufenden Hauptstegen (8) mit gleichem-Außendurchmesser (d₁) begrenzt ist und innerhalb der Abfuhrnut (7) wenigstens ein Nebensteg, (13, 18, 19, 23, 24) zur Bildung von wenigstens zwei Abfuhrnut-Abschnitten (14, 15, 16) vorgesehen ist und die Hauptstege (8) und Nebenstege (13, 18, 19, 23, 24) unterschiedliche Außendurchmesser (d₁, d₃) aufweisen, wobei innerhalb jeder Abfuhrnut (7) wenigstens ein spiralförmig, über die gesamte Förderwendellänge umlaufender Nebensteg (13, 18, 19, 23, 24) zur Bildung wenigstens einer Nebenförderwendel (18, 19) vorgesehen ist, **dadurch gekennzeichnet, daß** wenigstens ein Abfuhrnut-Abschnitt (14, 15, 16) einen zylindrisch ausgebildeten Bereich aufweist.

2. Bohrwerkzeug nach Anspruch 1, **dadurch gekennzeichnet, daß** die die Abfuhrnut (7) begrenzenden Hauptstege (8) und Nebenstege (13, 18, 19, 23, 24) wenigstens über einen Teil der Förderwendellänge und/oder über einen Teil oder Bereiche des Förderwendelumlaufs unterschiedliche Rückenstegbreiten (h₃, h₈) aufweisen.

3. Bohrwerkzeug nach Anspruch 1 oder 2, **dadurch gekennzeichnet, daß** eine zwei- oder vierspiralige Förderwendel (5) vorgesehen ist, wobei die die jeweilige Abfuhrnutabschnitte (14, 15, 16) begrenzenden Stege jeweils abwechselnd unterschiedliche Außendurchmesser (d₁, d₃) und/oder unterschiedliche Rückenstegbreiten (h₃, h₈) aufweisen.

4. Bohrwerkzeug nach einem der Ansprüche 1 bis 3, **dadurch gekennzeichnet, daß** jeder Abfuhrnut-Abschnitt (14, 15, 16) eine Bohrmehl-Tragfläche (11, 17, 17', 27, 28) aufweist.

5. Bohrwerkzeug nach Ansprüche 1 bis 4, **dadurch gekennzeichnet, daß** die Abfuhrnut (7) von zwei Hauptstegen (8) begrenzt ist und sich zwischen den Hauptstegen (8) wenigstens eine zusätzliche Bohrmehl-Tragfläche (17, 27, 28) in Form wenigstens eines Nebenstegs (13, 18, 19, 23, 24) befindet.

6. Bohrwerkzeug nach Anspruch 1 **dadurch gekennzeichnet, daß** der äußere Durchmesser (d₃) der Nebenstege (13, 18, 19, 23, 24) gegenüber dem Durchmesser (d₁) der Hauptstege (8, 8') zurückversetzt ist, wobei vorzugsweise der Außendurchmesser (d₃) der Nebenstege (13, 18, 19, 23, 24) etwa 70 bis 95 % des Außendurchmessers (d₁) der Hauptstege (8, 8') beträgt.

7. Bohrwerkzeug nach einem der Ansprüche 1 bis 6, **dadurch gekennzeichnet, daß** die Rückenbreite (h₈) der Nebenstege (13, 18, 19, 23, 24) kleiner ist als die Rückenbreite (h₃) der Hauptstege (8, 8').

8. Bohrwerkzeug nach einem der Ansprüche 1 bis 7, **dadurch gekennzeichnet, daß** zur Bildung von Bohrmehltragflächen die Tragflächen (11) der Hauptstege (8, 8') und/oder der Nebenstege (13, 18, 19) einen etwa rechtwinkligen Verlauf zur Bohrerlängsachse (12) aufweisen.

9. Bohrwerkzeug nach einem der Ansprüche 1 bis.8, **dadurch gekennzeichnet, daß** die Tragflächen (11) der Hauptstege (8, 8') und/oder der Nebenstege (13, 18, 19, 23, 24) einen ebenen, bauchigen oder taschenförmigen Verlauf aufweisen.

10. Bohrwerkzeug nach einem der vorgenannten Ansprüche, **dadurch gekennzeichnet, daß** die Querschnitte (11) der Hauptstege (8, 8') und/oder der Nebenstege (13, 18, 19, 23, 24) rechteckförmig, trapezförmig, halbtrapezförmig, dreieckförmig, halbkreisförmig und/oder spitz, flach oder rund zulaufend ausgebildet sind.

11. Bohrwerkzeug nach einem der vorgenannten Ansprüche, **dadurch gekennzeichnet, daß** die Nutentiefen (t₁, t₂) der Abfuhrnut-Abschnitte (14, 15, 16) gleich groß oder unterschiedlich ausgebildet sind, wobei wahlweise ein in Förderrichtung liegender Abfuhrnut-Abschnitt oder ein zur Bohrerspitze hinweisender Abfuhrnut-Abschnitt eine größere Nutentiefe (t₁, t₂) aufweist.

12. Bohrwerkzeug nach einem der vorhergehenden Ansprüchen, **dadurch gekennzeichnet, daß** ein oder mehrere Stege einer ein-oder mehrspiralige Förderwendel im Bereich des spiralförmigen Umlaufs unterschiedliche Außendurchmesser und/oder unterschiedliche Rückenstegbreiten (h₃, h₈) aufweist.

13. Bohrwerkzeuge nach einem der vorhergehenden Ansprüchen, **dadurch gekennzeichnet, daß** innerhalb einer bestehenden Abfuhrnut (7) mehrere spiralförmige Abfuhrnutabschnitte (14, 15, 16) vorgesehen sind, die von Nebenstegen (13, 18, 19, 23, 24) mit unterschiedlichem Außendurchmessern (d₃) begrenzt sind.

## Claims

1. Drilling tool in particular rock drill for rotating and/or percussive work, with a drill head (2), an adjoining single- or multiple-threaded spiral conveying helix (5) with at least one discharge groove (7) for drilling dust and a fixing shank (6), the discharge groove (7) of the conveying helix (5) being limited by spirally extending main webs (8) with equal external diameters (d₁) and at least one subsidiary web (13, 18, 19, 23, 24) for forming at least two discharge groove portions (14, 15, 16) is provided within the discharge groove (7) and the main webs (8) and subsidiary webs (13, 18, 19, 23, 24) have different external diameters (d₁, d₃), at least one subsidiary web (13, 18, 19, 23, 24) extending peripherally spirally over the entire length of the conveying spiral being provided within each discharge groove (7) to form at least one subsidiary conveying helix (18, 19), **characterised in that** at least one discharge groove portion (14, 15, 16) has a cylindrically constructed region.

2. Drilling tool according to claim 1, **characterised in that** the main webs (8) and subsidiary webs (13, 18, 19, 23, 21) limiting the discharge groove (7) have back web widths (h₃, h₈) which differ at least over a part of the conveying spiral length and/or over a part or regions of the conveying spiral periphery.

3. Drilling tool according to claim 1 or 2, **characterised in that** a two- or four-spiralled conveying helix (5) is provided, the webs limiting the respective discharge groove portions (14, 15, 16) each having external diameters (d₁, d₃) and/or back web widths (h₃, h₈) which differ alternately.

4. Drilling tool according to any of claims 1 to 3, **characterised in that** each discharge groove portion (14, 15, 16) has a drilling dust support surface (11, 17, 17', 27, 28).

5. Drilling tool according to claims 1 to 4, **characterised in that** the discharge groove (7) is limited by two main webs (8) and at least one additional drilling dust support surface (17, 27, 28) in the form of at least one subsidiary web (13, 18, 19, 23, 24) is located between the main webs (8).

6. Drilling tool according to claim 1, **characterised in that** the external diameter (d₃) of the subsidiary webs (13, 18, 19, 23, 24) is set back in relation to the diameter (d₁) of the main webs (8, 8'), the external diameter (d₃) of the subsidiary webs (13, 18, 19, 23, 24) preferably being about 70 to 95% of the external diameter (d₁) of the main webs (8, 8').

7. Drilling tool according to any of claims 1 to 6, **characterised in that** the back width (h₈) of the subsidiary webs (13, 18, 19, 23, 24) is smaller than the back width (h₃) of the main webs (8, 8').

8. Drilling tool according to any of claims 1 to 7, **characterised in that** the support surfaces (11) of the main webs (8, 8') and/or of the subsidiary webs (13, 18, 19) extend substantially at right angles to the longitudinal axis (12) of the drill, to form drilling dust support surfaces.

9. Drilling tool according to any of claims 1 to 8, **characterised in that** the support surfaces (11) of the main webs (8, 8') and/or of the subsidiary webs (13, 18, 19, 23, 24) have a plane, bulging or pocket-shaped course.

10. Drilling tool according to any of the preceding claims, **characterised in that** the cross-sections (11) of the main webs (8, 8') and/or of the subsidiary webs (13, 18, 19, 23, 24) are constructed in the form of a rectangle, trapezium, semi-trapezium, triangle and/or semi-circle and/or converge in a pointed, flat or round manner.

11. Drilling tool according to any of the preceding claims, **characterised in that** the groove depths (t₁, t₂) of the discharge groove portions (14, 15, 16) are equal or different in construction, a discharge groove portion lying in the conveying direction or a discharge groove portion pointing toward the drill tip selectively having a greater groove depth (t₁, t₂).

12. Drilling tool according to any of the preceding claims, **characterised in that** one or more webs of a single- or multiple-spiralled conveying helix have different external diameters and/or back web widths (h₃, h₈) in the region of the spiral periphery.

13. Drilling tools according to any of the preceding claims, **characterised in that** a plurality of spiral discharge groove portions (14, 15, 16) limited by subsidiary webs (13, 18, 19, 23, 24) with different external diameters (d₃) are provided within an existing discharge groove (7).

## Revendications

1. Outil de forage, en particulier fleuret à rocher pour une sollicitation rotative et/ou en percussion, comportant une tête de fleuret (2), une hélice de transport (5) s'y raccordant, en forme de spirale, à un ou deux filets ayant au moins une gorge d'évacuation (7) pour la poussière de forage, et un arbre de fixation (6), la gorge d'évacuation (7) de l'hélice de transport (5) étant limitée par des âmes principales (8) s'étendant en forme de spirale ayant le même diamètre externe (d₁) et, à l'intérieur de la gorge d'évacuation (7), il est prévu au moins une âme secondaire (13, 18, 19, 23, 24) pour former au moins deux tronçons de gorge d'évacuation (14, 15, 16), et les âmes principales (8) et les âmes secondaires (13, 18, 19, 23, 24) présentant différents diamètres externes (d₁, d₃), au moins une âme secondaire (13, 18, 19, 23, 24), en forme de spirale, s'étendant sur toute la longueur de l'hélice de transport étant prévue à l'intérieur de chaque gorge d'évacuation (7) pour former au moins une hélice de transport secondaire (18, 19),
**caractérisé en ce qu'**au moins un tronçon de gorge d'évacuation (14, 15, 16) présente une zone réalisée de façon cylindrique.

2. Outil de forage selon la revendication 1,
**caractérisé en ce que** les âmes principales (8) limitant la gorge d'évacuation (7) et les âmes secondaires (13, 18, 19, 23, 24) présentent, au moins sur une partie de la longueur de l'hélice de transport et/ou sur une partie ou des zones de la périphérie de l'hélice de transport, des largeurs d'âme différentes (h₃, h₈).

3. Outil de forage selon la revendication 1 ou 2,
**caractérisé en ce qu'**il est prévu une hélice de transport (5) à deux ou quatre spirales, les âmes limitant les tronçons de gorge d'évacuation respectifs (14, 15, 16) présentant, à chaque fois, de façon alternative différents diamètres externes ((d₁, d₃) et/ou différentes largeurs d'âme (h₃, h₈).

4. Outil de forage selon une des revendications 1 à 3,
**caractérisé en ce que** chaque tronçon de gorge d'évacuation (14, 15, 16) présente une surface de support de poussière de forage (11, 17, 17', 27, 28).

5. Outil de forage selon les revendications 1 à 4,
**caractérisé en ce que** la gorge d'évacuation (7) est limitée par deux âmes principales (8) et, entre les âmes principales (8), il se trouve au moins une surface de support de poussière de forage supplémentaire (17, 27, 28) sous forme d'au moins une âme secondaire (13, 18, 19, 23, 24).

6. Outil de forage selon la revendication 1,
**caractérisé en ce que** le diamètre externe (d₃) des âmes secondaires (13, 18, 19, 23, 24) dépend du diamètre (d₁) des âmes principales (8, 8'), le diamètre externe (d₃) des âmes secondaires (13, 18, 19, 23, 24) valant avantageusement environ 70 à 95 % du diamètre externe (d₁) des âmes principales (8, 8').

7. Outil de forage selon une des revendications 1 à 6,
**caractérisé en ce que** la largeur (h₈) des âmes secondaires (13, 18, 19, 23, 24) est plus petite que la largeur (h₃) des âmes principales (8, 8').

8. Outil de forage selon une des revendications 1 à 7,
**caractérisé en ce que**, pour former des surfaces de support de poussière de forage, les surfaces de support (11) des âmes principales (8, 8') et/ou des âmes secondaires (13, 18, 19) présentent une allure sensiblement à angle droit par rapport à l'axe longitudinal (12) du fleuret.

9. Outil de forage selon une des revendications 1 à 8,
**caractérisé en ce que** les surfaces de support (11) des âmes principales (8, 8') et/ou des âmes secondaires (13, 18, 19, 23, 24) présentent une allure plane, bombée ou en forme de poche.

10. Outil de forage selon une des revendications précitées,
**caractérisé en ce que** les sections transversales (11) des âmes principales (8, 8') et/ou des âmes secondaires (13, 18, 19, 23, 24) sont réalisées sous forme rectangulaire, trapézoïdale, semi-trapézoïdale, triangulaire, semi-circulaire et/ou de pointe, plate ou ronde.

11. Outil de forage selon une des revendications précitées,
**caractérisé en ce que** les profondeurs de gorge (t₁, t₂) des tronçons de gorge d'évacuation (14, 15, 16) sont réalisées de façon identique ou différente, au choix un tronçon de gorge d'évacuation se trouvant dans la direction de transport ou un tronçon de gorge d'évacuation orienté vers la pointe du fleuret présentant une profondeur de gorge plus grande (t₁, t₂).

12. Outil de forage selon une des revendications précédentes,
**caractérisé en ce qu'**une ou plusieurs âmes d'une hélice de transport à une ou plusieurs spirales présentent, dans la zone de la périphérie en forme de spirale, différents diamètres externes et/ou différentes largeurs d'âmes (h₃, h₈).

13. Outil de forage selon une des revendications précédentes,
**caractérisé en ce que**, à l'intérieur d'une gorge d'évacuation (7) existante, il est prévu plusieurs tronçons de gorge d'évacuation en forme de spirale (14, 15, 16) qui sont limités par des âmes secondaires (13, 18, 19, 23, 24) ayant différents diamètres externes (d₃).
